# EUROPEAN PATENT SPECIFICATION

(11) **EP 2 401 334 B1**
(45) Date of publication and mention of the grant of the patent: **11.05.2016**
(21) Application number: 10712488.5
(22) Date of filing: 25.02.2010
(51) Int. Cl.: C09D 5/14, C09D 163/00

(54) **METHOD FOR CLEANING AND DISINFECTING SURFACES, IN PARTICULAR AIR HANDLING PIPES**
VERFAHREN ZUR REINIGUNG UND DESINFEKTION VON OBERFLÄCHEN, INSBESONDERE LUFTBEHANDLUNGSROHREN
MÉTHODE DE NETTOYAGE ET DE DÉSINFECTION DE SURFACES, EN PARTICULIER DE TUYAUX DE TRAITEMENT D' AIR

(30) Priority: 26.02.2009 IT PD20090031
(43) Date of publication of application: 04.01.2012
(73) Proprietor: Griggio, Francesco, 35133 Padova (IT)
(72) Inventor: VIOLA, Francesco, I-30030 Pianiga (VE) (IT)
(74) Representative: Gallo, Luca
(86) International application number: PCT/IB2010/000406
(87) International publication number: WO 2010/097696

(56) References cited:
- EP-A- 1 371 699
- DE-A1- 2 647 605
- GB-A- 1 060 789
- US-A- 3 160 518

## Description

### Field of application

The present invention relates to a method for sanitizing surfaces intended to be passed over by the air, in particular of air ducts and duct components, according to the preamble of the main independent claim.

The method in question is intended to be used advantageously for providing an active coating, in order to control the hygienic conditions, on surfaces of any geometrical shape and size which are intended to be passed over by the air and therefore capable of conveying particles or microbes into environments frequented or occupied by people.

More particularly, the sanitizing method according to the invention is suitable for disinfecting internal surfaces of air-conveying ducts and duct components, in particular in distribution networks of both civil and industrial ventilation, heating and air-conditioning plants.

### Background art

As is known, the presence of physical and chemical contaminants and microorganisms (bacteria, fungi, mould, etc.) in indoor environments must be kept under control in order to ensure the necessary hygienic and health conditions, so as to prevent the propagation of harmful substances or pathogenic agents which may be damaging for human health.

It has been noted that in indoor environments diseases are transmitted more easily and on an epidemic scale, especially as a result of the poor hygienic condition of the surfaces passed over by the air, in particular the surfaces of air ducts, where bacterial and more generally microbial colonies may be present.

Similarly, the deposition of dust and polluting agents, which are normally present in the atmosphere, on the surfaces over which the air passes and then circulates within the various premises, may be equally damaging for health and must therefore be periodically eliminated.

Below the term "contaminants" is understood as indicating any undesired deposition on the surfaces, whether it be formed by particulate matter of any kind or by microbial colonies.

Particular attention must be paid to controlling the propagation and proliferation of bacteria, fungi, viruses and microorganisms in general, both in structures such as schools, nurseries, hospitals, rehabilitation centres, etc., i.e. environments where the level of hygiene must be carefully monitored in order to protect the health of the occupants of said environments, and in structures which have production premises, such as those in the food sector, pharmaceutical sector, analysis laboratories and in general controlled contamination environments, where monitoring of the hygiene of surfaces is an indispensable condition for ensuring the successful outcome of the activities performed.

Correct installation and correct maintenance of the air ducts for distributing and conditioning the air are of major importance for preventing the spread of microorganisms.

It is in fact entirely evident that in any indoor environment the air ventilation and distribution network with its air ducts constitutes an important vehicle for the diffusion of contaminants which are dispersed by air, and must therefore be strictly maintained from the point of view of hygiene.

Therefore, monitoring the quality of the indoor air necessarily involves ensuring the correct cleanliness and hygiene of the air-conveying ducts and duct components.

In greater detail, the possible causes of contamination of the ducts may be attributed to many factors such as dust freely present in the air, microorganisms and fungi which grow naturally in dust accumulations present inside the ducts, lubricating oil residue, earth and waste matter of various kinds resulting from the construction, transportation, on-site storage and installation of the ducts, etc.

The ducts of air processing plants may constitute, in particular in the presence of moisture (which may form inside the ducts as a result of condensation at low temperatures), sources of bacterial infection since they represent an environment favourable for the proliferation of epidemic sites of microbial colonies.

The method according to the present invention therefore has as it starting point the need to find a solution to the abovementioned problems with the aim of improving monitoring of the hygienic conditions of surfaces which are passed over by air and in particular the internal surfaces of air ducts.

The term "sanitization" is understood as indicating below generally all those surface maintenance operations aimed at controlling the undesirable contaminants as well as eliminating any microbial colonies and preventing their growth and increase.

If, on the one hand, it is in fact important to eliminate the microbial content already present on a surface with a specific biocidal action, on the other hand it is equally important to ensure that the sanitized surface is an environment unfavourable for the renewed growth of microbial cells so as to prevent, after a more or less long time period, this microbial content from being able to form again on the previously sanitized surface.

The increasing need for hygienic maintenance of environments has resulted in the development of products for coating the surfaces of environments or articles consisting of paints or coatings able to exert a significant microbicidal activity and prevent renewed microbial growth on the surfaces to which they are applied. These generally consists of reactive coatings or surface coatings which neutralize chemical and biological agents by means of a chemical reaction.

Conventionally, the most commonly used methods for providing the surfaces with a sanitizing effect are based on the use of paints with a standard composition to which suitable substances with biocidal properties are added in order to eliminate as wide a range as possible of organisms such as viruses, bacteria, algae, fungi, insects, etc.

For example the patent US 3160518 discloses a method for providing a protective coating on surfaces which is immersed in water. This method envisages the use of epoxy resins which have a high viscosity and to which advantageously substances with a fungicidal or insecticidal action are added. The epoxy resins used in the method described here are solvent-based, these having to be applied on underwater surfaces and consequently having to crosslink and harden in the presence of water. As is known, the solvents generally used for the dilution of resins such as, for example benzene, are toxic substances which remain as residue inside the resins, even when the latter are completely crosslinked and hardened, and are subsequently released by the latter with time. The method described in the patent US 3160518, therefore, is not suitable for being used for forming protective coatings on surfaces acted on by air and in particular on surfaces of air ducts and duct components, since these coatings would release over time toxic substances which would then be introduced into the premises occupied or frequented by people and would be inhaled by them, with consequences, also of a serious nature, on their health.

Also known are sanitization methods which make use of paints, or more generally, polymer materials which are able to form coatings which contain, as biocidal products, heavy-metal ions which are usually introduced via the associated oxides or salts.

An example of a coating of this kind is described in the patent JP 10237247, which describes the composition of a resin containing zinc salts able to impart anti-bacterial properties to surfaces treated with it.

Similarly, the patent US 2008/219944 describes the composition of a resin suitable for forming anti-fouling coatings, i.e. coatings which are able to prevent the formation of incrustations and the growth of algae on surfaces which remain in underwater environments. Oxides or salts of metals, such as zinc, magnesium, calcium, barium or, preferably, copper, are introduced into this composition, as substances with a biocidal action.

Furthermore, the patent WO 2007/147094 describes an anti-bacterial coating which is formed by dispersing nanoparticles or microparticles of a silver salt, such as silver bromide, in a polymer matrix.

In the patent US 56540125, instead, the biocidal action is imparted to a paint by means of the introduction of barium borate.

The use, for the sanitization of surfaces, of coatings with a biocidal action containing heavy metals, such as those described above, although having a good anti-microbial activity, have a number of drawbacks.

Firstly, the biocidal agents are not stably bonded to the polymer matrix into which they are introduced, but they are released with time, consequently reducing gradually the biocidal efficiency of the coating. In the case where, moreover, these coatings operate in a watery or humid environment, this release process occurs more rapidly, causing essentially washing out of the metal ions from the polymer coating.

In addition to the reduction in the anti-bacterial efficiency of the coatings, it is also necessary to consider the toxicity of the heavy metals which are released into the environment, and therefore the risk, not only for the personnel applying these coatings, but also for the persons occupying these premises and, more generally, for whoever breathes the air which has made contact with the treated surfaces.

The heavy metals released may also pollute the water and atmosphere and have toxic effects both on human beings and on other living organisms. Therefore, the introduction into the environment of the ions of these metals following their release by the aforementioned coatings is dangerous owing to the possible effects on plants, animals and persons.

Finally, the heavy metals used in these coatings may interfere in an undesirable manner with the materials which form the surfaces to be treated, being able to generate undesirable reactions. For example, copper-based compounds may cause colouring of the substrate.

In order to overcome these drawbacks, in particular to avoid the release of heavy metals into the environment, different surface sanitization methods have been developed, these making use of coatings containing biocidal agents which have a less marked environmental impact.

In this connection, it is known, for example, to use protective resins for coating surfaces to which quaternary ammonium salts have been added as biocidal agents.

Quaternary ammonium salts are widely known for their antiseptic, germicidal, deodorizing, disinfecting and cleansing action and, precisely because of these properties, they are used extensively in a wide range of industrial and civil sectors.

The patent WO 2007/127692, for example, describes the composition of a coating consisting of a polymer binder such as polyurethane, a polyvinyl acetate, an acrylic resin or epoxy resin to which a quaternary ammonium salt is added. The latter is able to provide the coating with different properties, such as fungicidal and biocidal properties, a mould-inhibiting capacity or capacity to prevent or inhibit the formation of algae or incrustations.

These sanitization methods have also proved in practice to be not without drawbacks. Firstly, the coatings containing quaternary ammonium salts as biocidal agents do not have a long-term effect. These, like the coatings described above, also make use of heavy metal ions as biocidal agents and generally have a good solubility in water and, therefore, when the coating is in contact with the water or with moisture, there is a reduction in its bactericidal action over time due to secondary reactions which remove the ammonium ions from the surface of the coating.

These methods have the advantage that they are not very costly and, compared to the sanitization methods described above which make use of heavy metal ions as biocidal agents, are characterized by a relatively low toxicity. However, the literature in this connection offers a somewhat varying view, and, although these compounds do not have a degree of toxicity which is comparable to that of the ions of heavy metals, it is preferable to limit as far as possible their release into the environment.

In order to overcome the problem relating to the release into the environment of biocidal agents, often of a toxic nature, by the coating, with a consequent reduction in its bactericidal action, coatings able to exert a biocidal action based on different mechanisms have been studied and developed.

In particular, photocatalytic coatings are known, such as for example that described in the patent WO 2007/106242, these generally containing titanium dioxide in the crystalline form of anatase, the biocidal action of which is performed by means of a chemical oxidation or reduction action, which results in decomposition of the microorganisms which are deposited on the coating.

These coatings, however, have a fairly major drawback: the reaction which results in decomposition of the microorganisms is activated by the combined action of light and air. The efficiency of the photocatalytic reaction, therefore, depends on the presence of the UV rays which reach the treated surface, this being minimum in the hours of darkness or in locations which are not directly exposed to solar or artificial radiation.

These coatings would therefore be entirely unsuitable for the sanitization treatment, for example, of air ducts which are generally not, or only partly exposed, to light.

Finally, the photocatalysis produces reaction residue which arises from conversion of the microorganisms and polluting substances and is generally harmless and produced in small amounts, but the possible environmental impact of which has not yet been studied and assessed in detail.

With reference to the specific sector of air ducts, sanitization methods which are based on mechanically separating the contaminant from the ducts and subsequent removal thereof are known. More particularly, sanitization methods which make use of systems for aspirating the contaminant, systems for blowing-in air or other fluids against the surface of the duct to be sanitized, or brush systems acting on the surface of the duct to be sanitized, are known.

All these methods, however, have been unable to achieve an optimum cleaning quality of the ducts and have in practice proved to be complicated, impractical and very energy/time-consuming.

### Disclosure of the invention

In this situation the problem forming the basis of the present invention is therefore that of eliminating the drawbacks of the prior art mentioned above by providing a method for the sanitization of surfaces intended to be passed over by the air, in particular of air ducts and duct components, which is able to improve, in an extremely effective manner, the hygienic conditions of the surfaces treated.

Another object of the present invention is to provide a method for sanitizing surfaces intended to be passed over by the air which has an effective microbicidal and microbiostatic action and is able to neutralize also the diffusion of all the contaminating depositions.

A further object of the present invention is to provide a method for sanitizing surfaces intended to be passed over by the air which is entirely safe for human health and does not release into the environment substances which have a toxic effect on human beings, animals and plants.

Another object of the present invention is to provide a method for sanitizing surfaces intended to be passed over by the air which is simple and inexpensive to implement and operationally entirely reliable.

### Detailed description of a preferred example of embodiment

The technical features of the solution, in accordance with the abovementioned objects, may be determined from the contents of the claims indicated below and the advantages thereof will emerge more clearly from the detailed description which follows, with reference to an embodiment provided purely by way of a non-limiting example.

The surfaces to be treated with the method according to the present invention may be of any kind without thereby departing from the scope of protection of the present invention and, in any case, as described in detail below, the method according to the invention, is suitable for being used in a particularly advantageous manner for sanitizing air ducts and duct components in plants of any kind intended for conveying and/or processing air such as ventilation, air-conditioning, heating and other plants.

In greater detail, with the method in question it is possible to produce a continuous and substantially uniform coating in a crosslinked solid state from a liquid mixture with filming effect, on all the surfaces to be treated, covering the deposited contaminants (dust, etc.) which have accumulated on them and rendering inactive the bacteria which may be present therein. More specifically, when this method is used for the reconditioning of air-conveying ducts, the creation of such a coating on the internal surfaces of the walls of the ducts is able to renovate and sanitize the interface between the ducts and the air flow conveyed in them, ensuring the formation of a surface with an anti-microbial action.

The product used for treatment of the surfaces consists of a formulation containing polymer precursors and is able to form a coating which adheres to the surface on which it is deposited.

Advantageously, this formulation is based on epoxy polymers, preferably of the type containing bisphenol A and able to be diluted in water.

Therefore, initially a step for preparing a first dose of an epoxy polymer and a step for preparing a second dose of a crosslinking catalyst are envisaged. Advantageously, the first dose and second dose of the epoxy polymer and the crosslinking catalyst, respectively, are prepared in the form of an aqueous dispersion. By means of a step involving mixing of the first dose of the epoxy resin with the second dose of the crosslinking catalyst it is possible to obtain, in a manner known per se, a mixture in liquid phase with filming effect. In the case where it is desired to obtain a mixture which is less viscous, the mixing step comprises dilution of the mixture with a third dose of water.

The liquid mixture with filming effect then undergoes a step involving spreading on the surface to be treated, followed by a crosslinking step during which it polymerizes and crosslinks to form a crosslinked solid coating.

Advantageously, this latter crosslinking step is performed in air: during this step complete drying of the liquid mixture occurs, so that the latter, polymerizing, expels the water contained in it and forms a solid coating which is entirely dry.

According to the idea forming the basis of the present invention, the crosslinking catalyst is selected from the family of polyamines and a second dose thereof is prepared in an amount greater than that required stoichiometrically for crosslinking of the first dose of the epoxy polymer.

Spreading of the liquid mixture with filming effect on the surface to be treated forms a substantially uniformly spread and continuous film of the liquid mixture with filming effect, which impregnates the contaminants present on the surface and thus defines a first microbicidal phase for a period of time, preceding the crosslinking step, during which the film remains liquid and during which the polyamines contained in the liquid film act on the contaminants present on the surface to be treated, eliminating any microbes present therein. The solid coating which is obtained at the end of crosslinking, when the initially liquid film is completely dried, defines a second microbicidal phase, during which surface amine groups of the polyamines which have not reacted with the epoxy groups, prevent the formation of microbial content even after a long period of time and without substantially releasing any substance which may be regarded as being a polluting source.

The method therefore uses a product with filming effect which envisages the preparation of a mixture obtained from epoxy precursors with the addition of polyamines as crosslinking agents and dilution with water so as to form an emulsion of the resin in water. As mentioned above, the first dose and the second dose of the epoxy precursors and the crosslinking catalyst, respectively, are prepared in the form of an aqueous dispersion. The mixture obtained from mixing of the first and second doses, therefore, is in the form of a liquid and may be easily applied onto the surfaces which are to be coated. The further addition of water is useful for obtaining a mixture which is less viscous when this is required by the deposition technique used, as will be explained more fully below.

The step of diluting the mixture with water must be performed with great caution. The overall water content in the mixture, in fact, constitutes a process variable which is of fundamental importance for successful formation of the coating. The water introduced into the mixture during dilution is added to the water already supplied by the doses of epoxy polymer and catalyst and the overall water content must be completely expelled from the film during polymerization thereof, namely before the crosslinking phase has been completed. If the water should be not be completely expelled from the film during the pot-life of the mixture - i.e. if the mixture is still able to be worked and the reacted molecules of the resin and the catalyst are still able to be rearranged - the mechanical properties of the coating would be irreversibly damaged. The expulsion of water during a period after expiry of the pot-life of the mixture would in fact produce internal stresses in the film which has already crosslinked, resulting in possible flaking and/or peeling from the substrate.

The water introduced into the mixture by means of the first dose of epoxy polymer and the second dose of catalyst and by means of any dilution step is calculated beforehand and the optimum amount determined so as to allow deposition of the liquid mixture on the surface to be treated using the method envisaged (such as pneumatic spraying) and complete drying in air of the liquid film during the crosslinking step.

Another process parameter which is of particular importance for successful formation of the coating is the temperature at which crosslinking of the liquid film is performed. During polymerization of the latter, in fact, any condensation of the atmospheric moisture thereon must be avoided. Should the crosslinking be performed at low temperatures, the condensate which forms on the liquid film during polymerization would slow down expulsion of the water contained in it, preventing crosslinking of the film.

According to the present invention, the amine groups, which belong to the polyamines, first act as microbicidal agents and then as crosslinking agents and then perform a further microbicidal action.

These polyamines are advantageously polyamines of the aliphatic type.

When the crosslinking agent is introduced into the mixture, the amine groups, which belong to the polyamines, react with the epoxy groups of the precursors, causing polymerization and creating a highly crosslinked system.

These crosslinking reactions occur, however, in a period of time which is sufficiently long to allow the operator to perform spreading of the mixture with filming effect on the surface to be treated, while it is still in the liquid phase, so as to form on the surface a polymer film which is also in the liquid phase.

The formulation of the mixture consisting of the epoxy precursor, the crosslinking agent and the water are suitably chosen, so that the product with filming effect has the ideal viscosity for the deposition method which is to be used. The mixture, in particular, preferably has a viscosity of between 50 and 500 cP.

More particularly, it is advisable to provide a product with filming effect having a greater viscosity where deposition is to be performed for example using a spatula, roller or brush, while it will be preferable to provide a product with filming effect having a lesser viscosity where deposition is to be performed by means of atomization of said product, namely using an aerosol. The liquid mixture obtained with the method according to the present invention is suitable for application by means of pneumatic spraying, without it being required to use high-pressure spraying apparatus.

Advantageously, in order to achieve complete sanitization of the surface to be treated, the product with filming effect will be deposited on the surface so as to create a continuous polymer film, thereby preventing the presence of zones of the surface which are not in direct contact with the film of liquid mixture with filming effect.

After it has been deposited on the surface, the liquid film interacts with the contaminant present on the surface itself.

On any surface, in fact, there will normally be depositions of varying nature, consisting for example of dust or microbial colonies. The liquid film thus obtained is suitable for impregnating and covering in an optimum manner all the contaminating depositions which adhere to the surface at the time of the sanitization treatment.

When the liquid film according to the present invention comes into contact with said contaminating depositions the amine groups firstly perform a microbicidal action, followed by crosslinking with subsequent formation of a solid polymer coating which rigidly bonds the contaminant to the surface, preventing its dispersion in the air.

More particularly, interaction of the liquid film with the contaminant present on the treated surface is followed by the crosslinking step with polymerization and crosslinking of the film which results in formation of the completely dried, solid, polymer coating.

This step, which already partly starts during deposition of the film, may take place during a solidification time interval which may also last for several hours. During this time interval, any subsequent deposition of filming product which might be required (for example following undesirable interruptions in the deposition process) would take place on the previous still liquid - or partially liquid - film and would result in combined crosslinking of the entire product deposited on the surface to be treated.

Advantageously, the solid coating which is created following the crosslinking step will be uniform and continuous so as to ensure perfect sealing of the contaminant present on the surface to be treated.

According to the invention not all the polyamines introduced into the product with filming effect interact with the contaminant present on the surface or react with the epoxy precursor in order to produce crosslinking, but some polyamines with free amine groups remain in the solid polymer coating.

Therefore, on the surface interfacing with the air, amine groups which belong to not completely reacted polyamines emerge from the polymer film of the coating.

In other words, once the crosslinked solid coating film has been formed with the contaminants rigidly incorporated, the amine groups of the polyamines present in the liquid polymer film which have not reacted with the epoxy groups perform a microbicidal action on any microorganisms which might be deposited on the coating, preventing the possible formation of further bacterial content.

The presence of these amine groups, in particular methylamine groups, has been demonstrated by means of solid-state carbon-13 nuclear magnetic resonance spectroscopy. By means of this investigation technique, as shown in Graph No. 1 below, it has been possible to evaluate the presence of particular chemical groups in the polymer coating formed according to the present method.

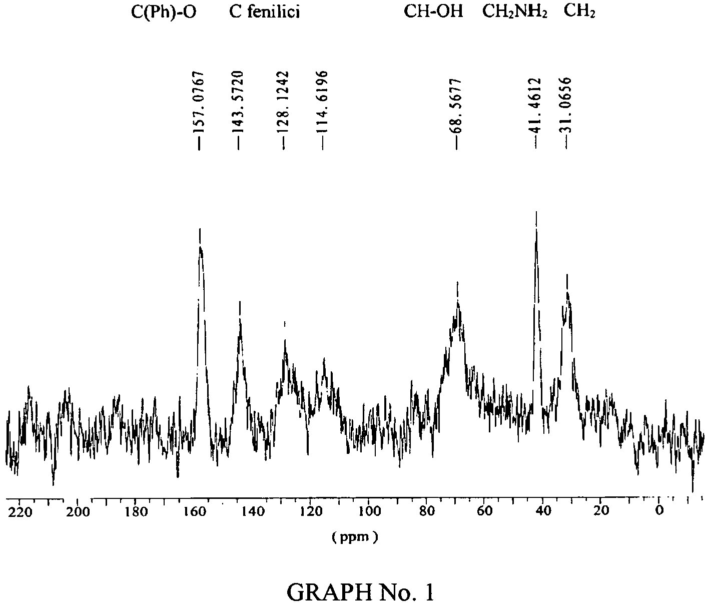

In particular, the fact that the signal at 41.46 ppm, which is characteristic of methylamine groups, or - CH₂ - NH₂ groups, is much narrower and more defined compared to the other signals, indicates that this group is not incorporated within the resin which forms the coating - this generally resulting in a more extended signal - but is free for new bonds in relation to the polymer mass and is directed towards the outside of the coating, therefore being able to interact with any contaminating agents which might be deposited on the said coating.

The crosslinking step is therefore following by a second microbicidal step intended to act on any possible contaminants which might be subsequently deposited on the solid polymer coating. This second microbicidal step is performed by means of said free amine groups which are able to interact with the microorganisms which come into contact with this coating.

In order to ensure an adequate presence of said free amine groups on the surface of the coating, the introduction of the polyamines into the mixture containing the epoxy precursors is performed in hyperstoichiometric amounts.

The amount of free amine groups on the surface able to allow the coating to perform the second microbicidal step is influenced by various factors, such as the viscosity of the product with filming effect which has been prepared or the kinetics of the resin crosslinking reactions, which may or may not help said groups to emerge on the surface of the coating. The introduction of polyamines in an amount greater than that required by the stoichiometry of the crosslinking reaction determines the presence, on the surface, of free amine groups emerging from the solid polymer coating.

As mentioned above, this method is suitable for being used also for the reconditioning of ducts in plants of any kind intended for conveying and/or processing air.

In this case, because of the difficulty encountered in reaching directly the internal walls of this ducts, it may be easier to perform spreading of the liquid mixture with filming effect on the internal surfaces of the air ducts by means of dispersion of the liquid mixture with filming effect in the form of droplets within a conveying air stream which is passed through the ducts, and then subsequent deposition of the droplets on the internal surface of the ducts with formation of a uniform and continuous liquid film which will then become, after the crosslinking step, a solid coating.

It is thus possible to perform remotely coating of the internal surface of the said ducts, of any geometrical shape, with a degree of continuity (i.e. distribution over all the surfaces of the duct) and with the desired degree of uniformity (i.e. distribution from the beginning to the end of the duct) as well as with the desired thickness of the film of filming product.

The aerosol is generated, via nozzle-type atomization means, within the air flow which preferably has a fully developed turbulence. More particularly, the aerosol may be introduced into the air flow in the direction of forward movement of said flow.

The flow which is generated keeps the said droplets suspended by means of its turbulence which is to be understood as being fully developed, i.e. with a flow characteristic defined by a Reynolds number of RE > 10,000.

This step may take place during a solidification time interval which may also last for several hours.

In order to reduce the duration of crosslinking of the liquid product on the internal surface of the duct, it will be possible to envisage one or more steps for drying the liquid film by means of generation of a drying air flow inside the duct advantageously at a temperature higher than that envisaged for the previous conveying air flow.

Moreover, it is equally important to point out that the solid resin coating which is formed by means of crosslinking on the surface of the duct has mechanical characteristics which allow it, on the one hand, to achieve a self-fixing action within the duct and, on the other hand, to withstand contact with the operating air flow of the plant without being released into the air and without releasing the coated contaminants.

Obviously, the present method may also be used on new air ducts and duct components in order to provide them with initial hygienic conditions.

The invention thus conceived therefore achieves the predefined objects.

Obviously, it may assume, during its practical realization, also forms and configurations different from that illustrated above, without thereby departing from the present scope of protection.

Moreover, all the details may be replaced by technically equivalent elements and the dimensions, the forms and the materials used may be of any nature according to requirements.

## Claims

1. Method for sanitizing surfaces intended to be passed over by the air, in particular air ducts and duct components, which comprises the following operating steps:
• a step for preparing a first dose of an epoxy polymer suitable for being diluted in water;
• a step for preparing a second dose of a crosslinking catalyst;
• a step for mixing the first dose of said epoxy polymer with the second dose of said crosslinking catalyst, obtaining a mixture in liquid phase with filming effect;
• at least one step for spreading said liquid mixture with filming effect on a surface to be treated, intended to be passed over by the air;
• at least one crosslinking step during which said liquid mixture with filming effect polymerizes and crosslinks, forming a crosslinked solid coating;
- **characterized in that** said catalyst is selected from the family of polyamines and said second dose thereof is prepared in an amount greater than that required stoichiometrically for crosslinking of the first dose of said epoxy polymer;
- **characterized in that** said step of spreading said liquid mixture with filming effect on said surface to be treated forms a substantially uniformly spread and continuous film of liquid mixture with filming effect, which impregnates the contaminants present on the surface and thus defines a first microbicidal step for a period of time, preceding said crosslinking step, during which said film remains substantially liquid and during which said polyamines contained in said film act on the contaminants present on said surface to be treated, eliminating any microbes present therein;
- and **characterized in that** said crosslinked solid coating defines a second microbicidal step, during which free surface amine groups of the polyamines which have not chemically bonded with the epoxy polymers, prevent the formation of microbial content, the presence of said free amine groups on the surface of the coating being ensured by the introduction of the polyamines into the mixture containing the epoxy precursors in hyperstoichiometric amounts.

2. Method for sanitizing surfaces according to Claim 1, **characterized in that** said polyamines are selected from the family of polyamines of the aliphatic type.

3. Method for sanitizing surfaces according to Claim 1, **characterized in that** said step of spreading a film of liquid mixture with filming effect comprises a step of dispersing said liquid mixture with filming effect, in the form of aerosol droplets, within a conveying air flow and a subsequent step of depositing said droplets on said surface to be treated with formation of said uniform and continuous film.

4. Method for sanitizing surfaces according to Claim 3, **characterized in that** said air flow containing said aerosol is conveyed with fully developed turbulence inside said air ducts.

5. Method for sanitizing surfaces according to Claim 3 or 4, **characterized in that** said aerosol is generated by nozzle-type atomization means, within said air flow in the direction of forward movement of the air flow.

6. Method for sanitizing surfaces according to any one of the preceding claims, **characterized in that**, during said crosslinking step, said contaminants impregnated in said liquid film remain rigidly incorporated in said crosslinked solid coating.

7. Method for sanitizing surfaces according to any one of the preceding claims, **characterized in that** said crosslinking step envisages one or more steps for drying the liquid film by generating an air flow on said surface to be treated.

8. Method for sanitizing surfaces according to Claims 3 and 7, **characterized in that** said drying air flow has a temperature higher than that of said conveying air flow.

9. Method for sanitizing surfaces according to Claim 1, **characterized in that** said second dose of said crosslinking catalyst is prepared in an aqueous dispersion.

10. Method for sanitizing surfaces according to Claim 1, **characterized in that** said first step of mixing the first dose of said epoxy polymer with the second dose of said crosslinking catalyst comprises a step involving dilution of said first dose and said second dose with a third dose of water.

11. Method for sanitizing surfaces according to Claim 1, **characterized in that** the first dose and second dose of the epoxy polymer and the crosslinking catalyst, respectively, are prepared in the form of an aqueous dispersion.

12. Method for sanitizing surfaces according to any one of the Claims from 9 to 11, **characterized in that** said mixture has a viscosity of between 50 and 500 cP, the formulation of said mixture consisting of the epoxy precursor, the crosslinking agent and the water being suitably chosen, so that the product with filming effect has the ideal viscosity for the deposition method which is to be used.

## Patentansprüche

1. Verfahren zur Reinigung und Desinfektion von zur Berührung mit Luft bestimmten Oberflächen, insbesondere Luftbehandlungsrohren und -Bauteilen, das die folgenden Arbeitsschritte umfasst:
• einen Schritt zur Vorbereitung einer ersten Dosis eines zum Verdünnen in Wasser geeigneten Epoxidpolymers;
• einen Schritt zur Vorbereitung einer zweiten Dosis eines vernetzenden Katalysators;
• einen Schritt des Mischens der ersten Dosis des genannten Epoxidpolymers mit der zweiten Dosis des genannten vernetzenden Katalysators zum Erzielen einer Mischung in Flüssigkeitsphase mit filmbildender Wirkung;
• mindestens einen Schritt zum Verteilen der genannten flüssigen Mischung mit filmbildender Wirkung auf einer zu behandelnden und zur Berührung mit Luft bestimmten Oberfläche;
• mindestens einen Schritt der Vernetzung, bei dem die genannte Mischung in Flüssigkeitsphase mit filmbildender Wirkung polymerisiert und vernetzt und so eine vernetzte Beschichtung ergibt;
- **dadurch gekennzeichnet, dass** der genannte Katalysator aus der Familie der Polyamine gewählt wird und in der genannten zweite Dosis in einer höheren Menge als der stöchiometrisch zur Vernetzung der ersten Dosis des genannten Epoxidpolymers notwendigen vorbereitet wird;
- **dadurch gekennzeichnet, dass** der genannte Schritt der Verteilung der genannten Mischung in Flüssigkeitsphase mit filmbildender Wirkung auf der genannten zu behandelnden Oberfläche einen Mischungsfilm in Flüssigkeitsphase mit filmbildender Wirkung ergibt, der im Wesentlichen gleichmäßig und durchgehend verteilt ist und die auf der Oberfläche vorhandenen Verunreinigungen durchtränkt und damit einen ersten mikrobiziden Schritt für ein Zeitintervall definiert, das dem genannten vernetzenden Schritt vorausgeht, bei dem der genannte Film im Wesentlichen in Flüssigkeitsphase vorliegt und bei dem die genannten, in dem Film enthaltenen Polyamine auf die Verunreinigungen der genannten zu behandelnden Oberfläche wirken und den in diesen enthaltenen Bakterienbefall beseitigen.
- und **dadurch gekennzeichnet, dass** die genannte feste vernetzte Beschichtung eine zweiten mikrobiziden Schritt definiert, bei dem die freien, nicht chemisch an die Epoxidpolymere gebundenen Amingruppen der Polyamine auf der Oberfläche das Einlagern von Bakterienbefall unterbinden. Das Vorhandensein dieser freien Amingruppen auf der Oberfläche der Beschichtung wird durch das Einführen der Polyamine in die die Epoxidvorläufersubstanzen in hyperstöchiometrischer Menge enthaltende Mischung gesichert.

2. Verfahren zur Reinigung und Desinfektion von Oberflächen nach Anspruch 1, **dadurch gekennzeichnet, dass** die genannten Polyamine aus der Familie der Polyamine aliphatischen Typs gewählt werden.

3. Verfahren zur Reinigung und Desinfektion von Oberflächen nach Anspruch 1, **dadurch gekennzeichnet, dass** der genannte Schritt der Verteilung eines Mischungsfilms in Flüssigkeitsphase mit filmbildender Wirkung einen Schritt der Dispersion der genannten Mischung in Flüssigkeitsphase mit filmbildender Wirkung in Form von Aerosoltropfen im Inneren eines Transportluftstroms und einen anschließenden Schritt des Absetzens der genannten Tropfen auf der genannten durch Bildung des genannten gleichmäßigen und durchgehenden Films zu behandelnden Oberfläche umfasst.

4. Verfahren zur Reinigung und Desinfektion von Oberflächen nach Anspruch 3, **dadurch gekennzeichnet, dass** der genannte Luftstrom mit dem genannten Aerosol darin mit voll entwickelter Turbolenz in die genannten Luftbehandlungsrohre geleitet wird.

5. Verfahren zur Reinigung und Desinfektion von Oberflächen nach Anspruch 3 oder 4, **dadurch gekennzeichnet, dass** das genannte Aerosol durch Zerstäubungsvorrichtungen mit Düsen in dem genannten Luftstrom in die Bewegungsrichtung des Luftstroms erzeugt wird.

6. Verfahren zur Reinigung und Desinfektion von Oberflächen nach einem beliebigen der vorangegangenen Ansprüche, **dadurch gekennzeichnet, dass** während des genannten Vernetzungsschritts die genannten mit dem genannten flüssigen Film getränkten Verunreinigungen fest von der genannten vernetzten festen Beschichtung umschlossen bleiben.

7. Verfahren zur Reinigung und Desinfektion von Oberflächen nach einem beliebigen der vorangegangenen Ansprüche, **dadurch gekennzeichnet, dass** der genannte Schritt der Vernetzung einen oder zwei Trocknungsphasen des flüssigen Films durch Erzeugung eines Luftstroms auf der genannten zu behandelnden Oberfläche vorsieht.

8. Verfahren zur Reinigung und Desinfektion von Oberflächen nach Anspruch 3 und 7, **dadurch gekennzeichnet, dass** der genannte Trocknungsluftstrom eine höhere Temperatur als die des genannten Transportluftstroms aufweist.

9. Verfahren zur Reinigung und Desinfektion von Oberflächen nach Anspruch 1, **dadurch gekennzeichnet, dass** der genannte vernetzende Katalysator in der genannten zweiten Dosis in Wasser dispergiert vorbereitet wird.

10. Verfahren zur Reinigung und Desinfektion von Oberflächen nach Anspruch 1, **dadurch gekennzeichnet, dass** der genannte Schritt des Mischens der ersten Dosis des genannten Epoxidpolymers mit der zweite Dosis des genannten vernetzenden Katalysators einen Schritt der Verdünnung der genannten ersten Dosis und der genannten zweiten Dosis mit einer dritten Dosis Wasser umfasst.

11. Verfahren zur Reinigung und Desinfektion von Oberflächen nach Anspruch 1, **dadurch gekennzeichnet, dass** das Epoxidpolymer und der vernetzende Katalysator jeweils in der ersten Dosis und der zweiten Dosis in wässriger Dispersion vorbereitet werden.

12. Verfahren zur Reinigung und Desinfektion von Oberflächen nach einem beliebigen der Ansprüche 9 bis 11, **dadurch gekennzeichnet, dass** die genannte Mischung eine Viskosität zwischen 50 und 500 cP aufweist, wobei die Formel der genannten aus der Epoxidvorläufersubstanz, dem vernetzenden Agens und dem Wasser bestehenden Mischung entsprechend gewählt wird, um dem Produkt mit filmbildender Wirkung eine für die Beschichtungstechnik, die eingesetzt werden soll, geeignete Viskosität zu verleihen.

## Revendications

1. Méthode de nettoyage et de désinfection de surfaces destinées à être baignées par l'air, en particulier de tuyaux et de composants de traitement d'air, comprenant les phases opérationnelles suivantes :
• une phase de préparation d'une première dose d'un polymère époxyde destiné à être dilué dans l'eau ;
• une phase de préparation d'une seconde dose d'un catalyseur de réticulation ;
• une phase de mélange de la première dose dudit polymère époxyde avec la seconde dose dudit catalyseur de réticulation afin d'obtenir un mélange en phase liquide à action filmante ;
• au moins une phase de distribution dudit mélange liquide à action filmante sur une surface à traiter destinée à être baignée par l'air ;
• au moins une phase de réticulation où ledit mélange en phase liquide à action filmante polymérise et réticule pour réaliser un revêtement solide réticulé ;
- **caractérisée en ce que** ledit catalyseur est choisi dans la famille des polyamines et préparé dans ladite seconde dose dans une quantité supérieure à celle qui est stoechiométriquement requise pour la réticulation de la première dose dudit polymère époxyde ;
- **caractérisée en ce que** ladite phase de distribution dudit mélange en phase liquide à action filmante sur ladite surface à traiter réalise un film de mélange en phase liquide à action filmante essentiellement distribué de manière uniforme et continue, qui imprègne les agents contaminants présents sur la surface et définit ainsi une première phase microbicide pendant un intervalle de temps qui précède ladite phase de réticulation, où ledit film est essentiellement en phase liquide et où lesdites polyamines contenues dans ledit film agissent sur les agents contaminants de ladite surface à traiter afin d'éliminer les charges microbiennes qu'elle contient ;
- et **caractérisée en ce que** ledit revêtement solide réticulé définit une seconde phase microbicide, où des groupes aminés superficiels libres des polyamines, non chimiquement liés aux polymères époxydes, inhibent l'instauration de charges microbiennes, la présence desdits groupes aminés libres sur la surface du revêtement est assurée par l'introduction des polyamines dans le mélange contenant les précurseurs époxydes en quantité hyper stoechiométrique.

2. Méthode de nettoyage et de désinfection de surfaces selon la revendication 1, **caractérisée en ce que** lesdites polyamines sont choisies dans la famille des polyamines de type aliphatique.

3. Méthode de nettoyage et de désinfection de surfaces selon la revendication 1, **caractérisée en ce que** ladite phase de distribution d'un film de mélange en phase liquide à action filmante comprend une phase de dispersion dudit mélange en phase liquide à action filmante, sous forme de gouttes d'aérosol, à l'intérieur d'un flux d'air de transport et une phase suivante de dépôt desdites gouttes sur ladite surface à traiter avec une formation dudit film uniforme et continu.

4. Méthode de nettoyage et de désinfection de surfaces selon la revendication 3, **caractérisée en ce que** ledit flux d'air est acheminé avec ledit aérosol à l'intérieur, avec une turbulence pleinement développée dans lesdits tuyaux de traitement d'air.

5. Méthode de nettoyage et de désinfection de surfaces selon la revendication 3 ou 4, **caractérisée en ce que** ledit aérosol est créé par des moyens d'atomisation à buses, dans ledit flux d'air dans la direction d'avancement du flux d'air.

6. Méthode de nettoyage et de désinfection de surfaces selon l'une des revendications précédentes, **caractérisée en ce que** pendant ladite phase de réticulation lesdits agents contaminants imprégnés dans ledit film liquide restent rigidement enfermés dans ledit revêtement solide réticulé.

7. Méthode de nettoyage et de désinfection de surfaces selon l'une des revendications précédentes, **caractérisée en ce que** ladite phase de réticulation prévoit une ou plusieurs phases de séchage du film liquide par la création d'un flux d'air sur ladite surface à traiter.

8. Méthode de nettoyage et de désinfection de surfaces selon les revendications 3 et 7, **caractérisée en ce que** ledit flux d'air de séchage est à une température supérieure à celle dudit flux d'air de transport.

9. Méthode de nettoyage et de désinfection de surfaces selon la revendication 1, **caractérisée en ce que** ledit catalyseur de réticulation est préparé dans ladite seconde dose dispersé dans l'eau.

10. Méthode de nettoyage et de désinfection de surfaces selon la revendication 1, **caractérisée en ce que** ladite phase de mélange de la première dose dudit polymère époxyde avec la seconde dose dudit catalyseur de réticulation comprend une phase de dilution de ladite première dose et de ladite seconde dose avec une troisième dose d'eau.

11. Méthode de nettoyage et de désinfection de surfaces selon la revendication 1, **caractérisée en ce que** le polymère époxyde et le catalyseur de réticulation sont préparés respectivement dans la première dose et dans la seconde dose en dispersion aqueuse.

12. Méthode de nettoyage et de désinfection de surfaces selon l'une des revendications de la 9 à la 11, **caractérisée en ce que** ledit mélange présente une viscosité comprise entre 50 et 500 cP, la formulation dudit mélange constitué par le précurseur époxyde, l'agent de réticulation et l'eau étant opportunément choisie, afin de conférer au produit à action filmante la viscosité appropriée à la technique de dépôt que l'on veut adopter.
